# EUROPÄISCHE PATENTANMELDUNG

(11) **EP 2 442 418 A2**
(43) Veröffentlichungstag der Anmeldung: **18.04.2012**
(21) Anmeldenummer: 11184286.0
(22) Anmeldetag: 07.10.2011
(51) Int. Cl.: H02H 7/26, H02H 7/30

(54) **Verfahren für ein Stromverteilungssystem mit zwei selektiv auslösenden Schaltern**

(30) Priorität: 18.10.2010 DE 102010042569
(71) Anmelder: Siemens Aktiengesellschaft, 80333 München (DE)
(72) Erfinder: Birkl, Ludwig, 93309 Kelheim (DE); Götz, Josef, 92272 Freudenberg - Aschach (DE)

(57) **Zusammenfassung**

Die Erfindung betrifft ein Verfahren für ein Stromverteilungssystem (1) mit zwei Schaltern (2, 3), wobei von einer Einspeisung aus gesehen der eine Schalter (2) vorgeordnet und der andere Schalter (3) nachgeordnet ist,
bei dem der über den nachgeordneten Schalter (3) fließende Strom (I) auch über den vorgeordneten Schalter (2) fließt, bei dem dem vorgeordneten Schalter (3) ein eigener Stromgrenzwert (13) vorgegeben ist, bei dem der vorgeordnete Schalter (2) jeweils geöffnet wird, wenn dessen Stromgrenzwert (12) für eine vorgegebene Zeit (t2) überschritten ist, bei dem die beiden Schalter (2, 3) signaltechnisch miteinander verbunden sind und bei dem der nachgeordnete Schalter (3) dem vorgeordneten Schalter (2) über die signaltechnische Verbindung (6) jeweils signalisiert, dass er den Strom (I) unterbrechen wird. Um alle selektiv im Sinne der Zonenselektivität miteinander verbundenen Schalter zu schützen, wird vorgeschlagen, dass der Stromgrenzwert (12) jeweils vergrößert und/oder die Zeit (t2) des vorgeordneten Schalters (2) jeweils verlängert werden, wenn der nachgeordnete Schalter (3) signalisiert, dass er den Strom (I) unterbrechen wird.

## Beschreibung

Die Erfindung betrifft ein Verfahren für ein Stromverteilungssystem mit zwei selektiv auslösenden Schaltern gemäß dem Oberbegriff des Anspruchs 1.

Leistungsschalter für Niederspannungen sind als Schalter bekannt, die in Stromverteilungsanlagen eingesetzt werden. Sie sind jeweils für einen Nennstrom ausgelegt und unterbrechen den durch den Schalter fließenden Strom (Wechselstrom), wenn dieser einen vorgegebenen Stromgrenzwert überschreitet, was insbesondere bei einem Kurzschluss der Fall ist. Zur Erfassung des Stroms ist am Stromleiter, der durch den Schalter verläuft, jeweils ein Stromwandler angeordnet. Eine elektronische Auslöseeinheit vergleicht den erfassten Strom mit dem Stromgrenzwert und öffnet den Schalter selbsttätig, indem er die Kontakte trennt, wenn der Stromgrenzwert überschritten wird.

Bei der Stromverteilung fließt der Strom über einen nachgeordneten Schalter auch über den vorgeordneten Schalter. Dabei sind in einer Stromverteilungsanlage in der Regel mehrere Schalter unterschiedlicher Baugröße und mit unterschiedlichem Schalternennstrom installiert, wobei die Baugröße und der Schalternennstrom von der Einspeisung zum Verbraucher hin abnehmen; man spricht auch von einer Staffelung im Nennstrom-Verhältnis.

Die Schalter verhalten sich im Kurzschlussfall selektiv zueinander, wobei Selektivität bedeutet, dass jeweils nur der Schalter auslöst, welcher dem Kurzschluss am nächsten liegt.

Bei der Zeitselektivität weist jeder (vorgeordnete) Schalter eine Verzögerungszeit auf, die umso länger ist, je höher sein Nennstrom ist und je mehr Schalter ihm maximal nachgeordnet sein können bzw. sind. So sind bei einer selektiven Staffelung im Nennstrom-Verhältnis 1:1,6 die Verzögerungszeiten im Schalter mit dem größten Nennstrom deutlich größer zu wählen als bei einer Staffelung im Nennstrom-Verhältnis 1:2,5.

Erkennt die Auslöseeinheit z.B. des vorgeordneten Schalters einen Kurzschluss (Überschreitung seines vorgegebenen Stromgrenzwerts), so wartet sie zunächst die Verzögerungszeit (also z.B. 25 ms) ab. In dieser Zeit gibt sie dem nachgeordneten Schalter die Möglichkeit, den Kurzschluss abzuschalten. Die Auslöseeinheit im vorgeordneten Schalter löst nur aus, wenn der Kurzschluss nach Ablauf der Verzögerungszeit nicht von einem nachgeordneten Schalter abgeschaltet worden ist.

Bei der Zonenselektivität sind die Schalter mittels Verbindungsleitungen in Form einer verdrillten Zweidrahtleitung miteinander verbunden, wobei die Verbindungsleitungen zusammen mit einer Stromquelle einen geschlossenen Stromkreis bilden. Wird ein vorgegebener Stromgrenzwert überschritten, so gibt der nachgeordnete Schalter jeweils ein Signal (Sperrsignal) auf die Verbindungsleitungen. Das Signal ist im einfachsten Fall ein Strompegel. Auf diese Weise signalisiert der nachgeordnete Schalter dem vorgeordneten, dass sein vorgegebener Stromgrenzwert überschritten ist und er den Strom unterbrechen wird.

Durch das Signal wird der vorgeordnete Schalter erst nach der vorgegebenen Verzögerungszeit geöffnet, d.h. solange ist er quasi blockiert, was zu einer Zerstörung des Schalters führen kann.

Die Aufgabe der Erfindung ist es, alle Schalter in einem Stromverteilungssystem zu schützen, in dem diese selektiv im Sinne der Zonenselektivität miteinander verbunden sind.

Die Aufgabe wird durch die Merkmale des Anspruchs 1 gelöst; der Unteranspruch stellt eine vorteilhafte Ausgestaltung dar. Die Lösung sieht vor dass der Stromgrenzwert jeweils vergrößert und/oder die Zeit des vorgeordneten Schalters jeweils verlängert werden, wenn der nachgeordnete Schalter signalisiert, dass er den Strom unterbrechen wird. Die Lösungsidee besteht also darin, dass der vorgeordnete Schalter das Signal des nachgeordneten Schalters nicht als Blockiersignal verwendet, sondern seinen Stromgrenzwert und/oder seine Verzögerungszeit ändert, d. h. in der Regel beide vergrößert. Dadurch wird eine Auslösung des vorgeordneten Schalters im Selektivfall verhindert; trotzdem bleibt der Eigenschutz des vorgeordneten Schalters bestehen. Der Stromgrenzwert und/oder die Verzögerungszeit werden so gewählt, dass sie über den möglichen Durchlasswerten der aus mindestens einem vorgeordneten und mindestens einem nachgeordneten Schalter bestehenden Schalteranordnung (Schalterkombination) liegen, aber unterhalb der Werte, die bei einem Schalter allein auftreten können. Allgemein gesagt, wird bei Auftreten des Signals eine Änderung der Schutzparameter, also insbesondere die Stromgrenzwerte und/oder die Verzögerungszeiten, der gesamten Schalteranordnung vorgenommen, die aus mindestens zwei Schaltern gebildet wird. Die Änderung der Schutzparameter wird so vorgenommen, dass sowohl die Selektivität als auch der Selbstschutz der Schalter gewährleistet sind.

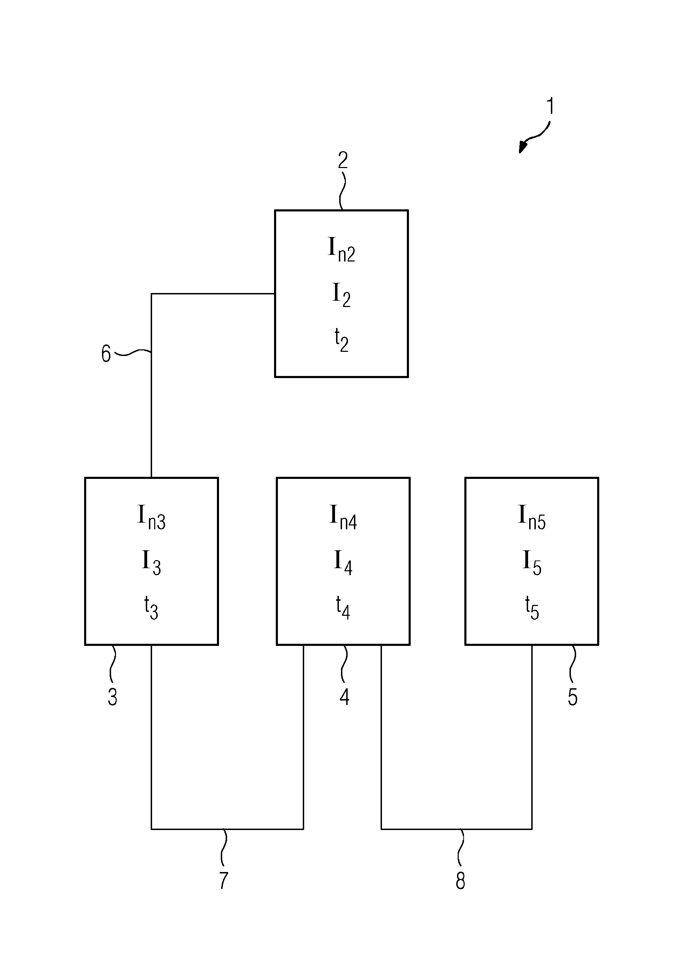

Die Erfindung wird nachfolgend anhand einer Zeichnung näher beschrieben, deren einzige Figur schematisch ein Stromverteilungssystem 1 mit Leistungsschaltern für Niederspannungen zeigt, einem vorgeordneten Schalter 2 und drei nachgeordnete parallel geschaltete Schalter 3, 4, 5.

Die Schalter 2, 3, 4, 5 sind jeweils für einen Nennstrom In2, In3, In4, In5 ausgelegt und unterbrechen den durch den Schalter 2, 3, 4, 5 fließenden Strom I (Wechselstrom), wenn dieser einen vorgegebenen Stromgrenzwert 12, 13, 14, 15 (Stromgrenzwert 12 bei Schalter 2, 13 bei Schalter 3, ...) überschreitet, was insbesondere bei einem Kurzschluss der Fall ist. Zur Erfassung des Stroms I ist am Stromleiter, der durch den Schalter 2, 3, 4, 5 verläuft, jeweils ein Stromwandler angeordnet. Der Strom I über die parallel geschalteten nachgeordneten Schalter 3, 4, 5 fließt auch über den vorgeordneten Schalter 2.

Der vorgeordnete Schalter 2 weist einen Stromgrenzwert von 12 = 10xIn (10-facher Nennstrom In) und eine Verzögerungszeit von t2 = 3 ms auf.

Die Schalter 2, 3, 4, 5 verhalten sich im Kurzschlussfall selektiv zueinander, d.h. dass jeweils nur der Schalter 2, 3, 4, 5 auslöst, welcher dem Kurzschluss am nächsten liegt.

Weiter sind die Schalter 2, 3, 4, 5 mittels Verbindungsleitungen 6, 7, 8 in Form von verdrillten Zweidrahtleitungen jeweils paarweise miteinander verbunden, wobei die Verbindungsleitungen 6, 7, 8 zusammen mit einer Stromquelle einen geschlossenen Stromkreis bilden. So verbindet die Verbindungsleitung 6 die beiden Schalter 2 und 3, die Verbindungsleitung 7 die Schalter 3 und 4 und die Verbindungsleitung 8 die Schalter 4 und 5.

Wird der vorgegebene Stromgrenzwert 13 des Schalters 3 überschritten, z.B. bei einem Kurzschluss, so gibt er einen Strompegel als Signal auf die Verbindungsleitung 6. Auf diese Weise signalisiert der (nachgeordnete) Schalter 3 dem (vorgeordneten) Schalter 2, dass sein vorgegebener Stromgrenzwert 13 überschritten ist und er den Strom I unterbrechen wird.

Bei Empfang des Signals setzt die Auslöseeinheit des Schalters 2 dessen Stromgrenzwert Ii auf 30xIn und die Verzögerungszeit t auf 8 ms. Steigt der Strom durch den Schalter 2 auf Grund des Kurzschlusses vor Ablauf der 8 ms über einen Wert von 30 x In, so löst der Schalter 2 aus und unterbricht den Strom I.

Ohne Signal ist der Schalter 2 in Bezug auf seinen Stromgrenzwert 12 und seine vorgegebene Verzögerungszeit t2 so eingestellt, dass er schnellstmöglich auslöst. Dies verschlechtert sich etwas bei Ii = 30xIn und t = 8 ms. Dafür wird der Schalter 2 bei einem Kurzschluss entsprechend geschützt.

Die Schalteranordnung des Stromverteilungssystems 1 weist bezogen auf die Schalter 2, 3 zusammenfassend also einen von der Einspeisung aus gesehen vorgeordneten Schalter 2 und einen diesem nachgeordneten Schalter 3 auf. Der durch den Schalter 3 fließende Strom I fließt dabei auch bei einem Kurzschluss über den Schalter 2. Der Schalter 2 ist ein eigener Stromgrenzwert 12 vorgegeben; er öffnet jeweils, wenn der Stromgrenzwert 12 für eine vorgegebene Zeit überschritten ist. Die beiden Schalter 2, 3 sind signaltechnisch miteinander verbunden. Mittels eines Signals signalisiert der Schalter 3 dem Schalter 2 bei Überschreitung seines Stromgrenzwerts 13 jeweils, dass er den Strom I unterbrechen wird. Daraufhin vergrößert der Schalter 2 seinen Stromgrenzwert 12 und/oder verlängert die Zeit t2.

## Patentansprüche

1. Verfahren für ein Stromverteilungssystem (1) mit zwei Schaltern (2, 3), wobei von einer Einspeisung aus gesehen der eine Schalter (2) vorgeordnet und der andere Schalter (3) nachgeordnet ist,
bei dem der über den nachgeordneten Schalter (3) fließende Strom (I) auch über den vorgeordneten Schalter (2) fließt, bei dem dem vorgeordneten Schalter (3) ein eigener Stromgrenzwert (13) vorgegeben ist,
bei dem der vorgeordnete Schalter (2) jeweils geöffnet wird, wenn dessen Stromgrenzwert (12) für eine vorgegebene Zeit (t2) überschritten ist,
bei dem die beiden Schalter (2, 3) signaltechnisch miteinander verbunden sind und
bei dem der nachgeordnete Schalter (3) dem vorgeordneten Schalter (2) über die signaltechnische Verbindung (6) jeweils signalisiert, dass er den Strom (I) unterbrechen wird, **dadurch gekennzeichne**t,
dass der Stromgrenzwert (12) jeweils vergrößert und/oder die Zeit (t2) des vorgeordneten Schalters (2) jeweils verlängert werden, wenn der nachgeordnete Schalter (3) signalisiert, dass er den Strom (I) unterbrechen wird.

2. Verfahren nach Anspruch 1,
**dadurch gekennzeichnet,**
**dass** die Signalisierung mittels eines Signals erfolgt, das vom nachgeordneten Schalter (3) auf Verbindungsleitungen (6) gegeben wird, welche den vorgeordneten (2) und den nachgeordneten Schalter (3) miteinander verbinden.
